# EUROPEAN PATENT APPLICATION

(11) **EP 1 598 326 A1**
(43) Date of publication of application: **23.11.2005**
(21) Application number: 04715233.5
(22) Date of filing: 27.02.2004
(51) Int. Cl.: C04B 35/01, C04B 35/622, B01J 19/28

(54) **THE METHOD FOR PREPARING PEROVSKITE-TYPE COMPOUND POWDERS**

(30) Priority: 28.02.2003 CN 03106771
(71) Applicant: Nanomaterials Technology Pte Ltd, Singapore 139944 (SG); Beijing University of Chemical Technology, Beijing 100029 (CN)
(72) Inventor: CHEN, Jianfeng, Beijing 100029 (CN); SHEN, Zhigang, Beijing 100029 (CN); JIMMY, Yun, Beijing 100029 (CN)
(86) International application number: PCT/CN2004/000153
(87) International publication number: WO 2004/076379

(57) **Abstract**

A process for preparing perovskite-type compound Aₓ(BO₃)_{y} powders comprises reacting a solution containing A, a solution containing B, or a combined solution comprising A and B with an alkaline solution in a high-gravity reactor at a temperature ranging from about 60 °C to about 100 °C, wherein A is one or more metal elements selected from the group consisting of Li, Na, K, Mg, Ca, Sr, Ba, Pb, Sm, La, Nd, Bi, and other rare-earth metal elements, B is one or more metal elements selected from the group consisting of Ti, Zr, Sn, Hf, Nb, Ce, Al, Zn, Mn, Co, Ni, Fe, Cr, Y, Sc, W, Ta, and the like. The resulting mixture is then filtered, rinsed and dried to obtain the desired powders. The obtained perovskite-type compound Aₓ(BO₃)_{y} powders have a small average particle size with a narrow particle size distribution, a perfect crystal form and a uniform particle shape, and is suitable for use as raw material for making dielectric, piezoelectric, anti-ferroelectric, pyroelectric, pressure-resisting, sensing, microwave media, and other ceramics.

## Description

### FIELD OF THE INVENTION

The present invention relates to a process for producing simplex or composite solid solution of perovskite-type compound Aₓ(BO₃)_{y} powders. Particularly, it relates to a process for producing perovskite-type crystalline compound powders in a high-gravity reactor. More particularly, it relates to a process for continuously producing perovskite-type crystalline compound powders having a narrow particle size distribution in a high-gravity reactor.

### BACKGROUND ART

A perovskite-type compound has a general formula of Aₓ(BO₃)_{y}, whose representative is a compound with a structure of ABO₃, such as BaTiO₃, wherein the cations at A site which have a relatively large ionic radius (alkali metals, alkali earth metals) are located at the interstice of a tetradecahedron constituted by oxygen anions with the coordination number of twelve; and the cations at B site which are ions of transition metals generally having a relatively small ionic radius form a BO₆ octahedron with oxygen anions, the cations at B site being bonded to the oxygen anions through respective apex points. Furthermore, it also has crystalline structures of both RP-type perovskite composite oxides and double-perovskite type composite oxides. A RP-type perovskite composite oxide is known as a Ruddlesdon-Poppe type ternary composite oxide. RP structure is formed by alternatively stratifying n layers of ABO₃ perovskite structure and a layer of halite structure (AO); and it has a structure of K₂NiF₄ (A₂BO₄) for n=1. Double-perovskite is a kind of composite oxides having a stoichiometric formula of AA'BB'O₆. More than 300 kinds of double-perovskite type composite oxides have been synthesized since 1950s. From the standpoint of solid chemistry, one major characteristic of double-perovskite is the super-structure phenomena of the cations at B site. In the structure of double-perovskite, the distribution of cations at B site can be classified as follows: 1) disordered arrangement, 2) halite structure, 3) layered structure. A perovskite-type compound typified by BaTiO₃ is a kind of important raw material for producing electronic ceramics which are the most widely used in the whole world, and is mainly employed for producing high capacitance layered capacitors, multilayer sheets, sensors, semiconductive materials and sensitive components because suitable and adjustable dielectric constants, and excellent ferroelectric, piezoelectric, pressure- resisting and insulating properties can be achieved by applying a doping method or other methods. So it has important commercial value. In particular, since perovskite-type electronic ceramics are obtained by molding and sintering perovskite-type compound powders to form bulk ceramics, the quality of final product can be directly affected by the quality of the powders. Recently, electronic components tend to be more miniaturized, more multifunctional, more highly performed, and further integrated. To meet the requirements of the above trends, it is desired to obtain electronic ceramic powders having the following properties: (1) a relatively small particle size, generally an average particle size of less than 200nm is required; (2) a narrower particle size distribution; (3) a spherical form; (4) a good crystallinity (5) a relatively low sintering temperature. Thus, the resulting electronic ceramic materials prepared by using such perovskite-type powders as raw materials have excellent sintering characteristic and stacking density, higher dielectric constant and reduced sintering temperature. For example, as capacitor material, it has the advantages of saving expensive inside-electrodes and reducing the volume of the capacitors, and the like.

At present, the process for preparing perovskite-type compound powders can be divided into two types: solid phase reaction method and liquid phase reaction method.

Solid phase reaction method is a process for producing simplex or composite perovskite-type compound powders, in which solid materials such as carbonates or oxides of element A (A is one or more metal elements selected from the group consisting of Li, Na, K, Mg, Ca, Sr, Ba, Pb, Sm, La, Nd, Bi and other rare-earth metals) and oxides of element B (B is one or more metal elements selected from the group consisting of Ti, Zr, Sn, Hf, Nb, Ce, Al, Zn, Mn, Co, Ni, Fe, Cr, Y, Sc, W, Ta and the like) are mixed and calcined at a high temperature ranging from about 1000 °C to 1450 °C, followed by wet milling, filtering and drying. The block aggregates of the perovskite-type compound prepared by this method are difficult to be milled into fine particles having a particle size of less than 1 µm by means of wet milling, or even no perovskite-type compounds can be obtained sometimes. In addition, the particles prepared by this method generally contain many impurities, and have a large particle size, a wide particle size distribution and a low purity. So sintering at a high temperature is necessary for producing ceramic materials. Therefore, the product made by this method can not meet the requirement of minimization, multi-functionalization and integration of the electronic ceramic devices.

Accordingly, liquid phase reaction method is commonly employed to produce high quality perovskite-type compound powders. The liquid phase reaction method mainly includes chemical precipitation, coprecipitation, sol-gel method and hydrothermal process. For example, it is disclosed (Kazunobu Abe. et al. U.S. Pat. No. 4,643,984, 1987) that perovskite-type compound having a formula of ABO₃ (wherein A is Mg, Ca, Sr, Ba, Pb or other rare-earth metal elements, and B is Ti, Zr, Sn, or Hf) can be produced in three steps: in the fist step, performing a hydrothermal reaction between a hydroxide containing element A (wherein A is Mg, Ca, Sr, Ba, Pb or other rare-earth metal elements) and a hydroxide containing element B (B is Ti, Zr, Sn, or Hf); then in the second step, adding an insoluble agent, such as carbon dioxide to precipitate unreacted A, so as to adjust the stoichiometric ratio of A and B, or in the second step, filtering the suspension obtained from the hydrothermal reaction, rinsing with water and drying, followed by dispersing in water again, and adding A into the resulting suspension, and then adding a precipitant to precipitate A, so as to adjust the stoichiometric ratio of A/B; in the third step, obtaining the simplex or composite perovskite-type compound ABO₃ having a desired stoichiometric ratio by filtering, rinsing and drying operation.

Also, for example, Dawson et al. (WO 90/06291) proposed a process for preparing a precursor of perovskite-type compound by reacting oxalates of B with chlorides or hydroxides of A, and then calcinating the precursor to obtain the perovskite-type compound.

The above processes are generally multi-step reactions with complex procedure. Reaction at a high temperature and/or high pressure, or calcination at a high temperature is required to obtain perovskite-type compound powders with integrated crystal form; therefore, the disadvantage of the above processes for preparing perovskite-type compound powders lies in their relatively high production costs and equipment expenses. Furthermore, after reaction, complex post-treatments are needed to obtain perovskite-type compound powders that possess the desired stoichiometric ratio and have integrated crystal form. Since most of the above processes are incontinuous, the qualities of powders in individual batches are different from each other, and production in industrial scale is difficult.

Thus, the present invention is expected to meet the recent requirements for developing more miniaturized, more multifunctional, more highly performed, and further integrated electronic components; and to obtain perovskite-type compound powders having a small average particle size, a narrow particle size distribution, a good crystallinity, a spherical crystal form, and a low sintering temperature, thereby to provide a process, which can be operated simply and carried out at lower temperature and atmospheric pressure compared with the prior art, for controllably making perovskite-type compound powders having a desired average particle size; and also to provide perovskite-type compound powders with integrated crystal form and the desired stoichiometric ratio, without the necessity of further post-treatment, thereby to reduce the production costs and the equipment expenses and to effect industrial production.

One object of the present invention is to provide a process for preparing the perovskite-type compound powders at a lower temperature and atmospheric pressure.

Another object of the present invention is to provide a process for controllably preparing the perovskite-type compound powders having a desired average particle size, particularly ultra-fine perovskite-type compound powders, more particularly nano-sized perovskite-type compound powders.

Another object of the present invention is to provide a process for continuously preparing the perovskite-type compound powders.

Still another object of the present invention is to provide a process for preparing the perovskite-type compound powders having a small average particle size and a narrow particle size distribution.

### SUMMARY OF THE INVENTION

The present invention provides a process for preparing the perovskite-type compound powders Aₓ(BO₃)_{y}, which comprises reacting a solution containing cation A, a solution containing cation B with an alkaline solution, or reacting a combined solution containing cation A and B with an alkaline solution, in a high-gravity reactor at a temperature of about 60 °C to about 100 °C; wherein A is one or more than one of metal elements selected from the group consisting of Li, Na, K, Mg, Ca, Sr, Ba, Pb, Sm, La, Nd, Bi and other rare-earth metal elements; and B is one or more than one of metal elements selected from the group consisting ofTi, Zr, Sn, Hf, Nb, Ce, Al, Zn, Mn, Co, Ni, Fe, Cr, Y, Sc, W, Ta, and the like; x and y are each independently a number from1 to 4 to balance the valence; provided that said Aₓ(BO₃)_{y} does not represent BaTiO₃ and SrTiO₃.

Preferably, a combined solution containing cation A and B is reacted with an alkaline solution in a high gravity reactor. Optionally, the resulting slurry containing ultra-fine perovskite-type compound powders was subjected to the post treatments, such as ageing, filtrating, washing, drying, and the like, according to conventional methods, to obtain perovskite-type compound powders having properties as desired according to the present invention.

The process according to the present invention can be used for preparing simplex or composite perovskite-type compound powders continuously.

The perovskite-type compound powders prepared according to the process of the present invention preferably have a nano-scaled or submicron-scaled primary particle size, a controllable average particle size and a narrow particle size distribution. A slurry containing said perovskite-type compound powders can also be prepared according to the process of the present invention.

### BRIEF DESCRIPTION OF THE DRAWINGS

Fig 1 is a TEM image of Ba_{0.85}Sr_{0.15}TiO₃ powder of the present invention.
Fig 2 is XRD diffraction patterns of the BaTiO₃, Ba₁₋ₓSrₓTiO₃, and SrTiO₃ powders of the present invention.
Fig 3 is a TEM image of Ba_{0.8}Sr_{0.2}TiO₃ powder of the present invention.
Fig 4 is a TEM image of Ba_{0.5}Sr_{0.5}TiO₃ powder of the present invention.
Fig 5 is a TEM image of BaTi_{0.85}Zr_{0.15}O₃ powder of the present invention.
Fig 6 is a TEM image of BaTi_{0.95}Zr_{0.05}O₃ powder of the present invention.
Fig 7 is a TEM image of BaTi_{0.7}Zr_{0.3}O₃ powder of the present invention.
Fig 8 is a TEM image of Ba_{0.75}Sr_{0.25}Ti_{0.75}Zr_{0.25}O₃ powder of the present invention.
Fig 9 is a process flowchart of preparing perovskite-type compound powders by using two feed materials according to the present invention.
Fig 10 is a process flowchart of preparing perovskite-type compound powders by using three feed materials according to the present invention.
Fig 11 is a schematic diagram of the ultrahigh gravity reactor according to the present invention.

### DETAILED DESCRIPTION OF THE INVENTION

The present invention provides a process for preparing perovskite-type compound powders Aₓ(BO₃)_{y}, comprising:
reacting a solution containing cation A, a solution containing cation B with an alkaline solution, or reacting a combined solution containing cation A and B with alkaline solution, in a high-gravity reactor at a temperature of about 60 °C to about 100 °C; wherein A is one or more metal elements selected from the group consisting of Li, Na, K, Mg, Ca, Sr, Ba, Pb, Sm, La, Nd, Bi and other rare-earth metal elements; and B is one or more metal elements selected from the group consisting of Ti, Zr, Sn, Hf, Nb, Ce, Al, Zn, Mn, Co, Ni, Fe, Cr, Y, Sc, W, Ta, and the like; x and y are each a number to balance the valence;
provided that said Aₓ(BO₃)_{y} does not represent BaTiO₃ and SrTiO₃.

In the process according to the present invention, A is preferably one or more than one, e.g. two or three, of Li, Na, K, Mg, Ca, Sr, Ba, Pb, Sm, La, Nd, and Bi, more preferably one or more than one of Li, Na, K, Mg, Ca, Sr, Ba, and La, still more preferably one or more than one of Mg, Ca, Sr, Ba, and La. B is preferably one or more than one, e.g. two or three, ofTi, Zr, Sn, Hf, Nb, Ce, Al, Zn, Mn, Co, Ni, Fe, Cr, Y, Sc, W, and Ta, more preferably one or more than one of Ti, Zr, Sn, Hf, Nb, Ce, Al, Zn, Mn, Ni, Fe, Cr, W, and Ta, still more preferably one or more than one of Ti, Zr, Sn, Hf, Nb, and Ce.

In the perovskite-type compound powders Aₓ(BO₃)_{y}, x is equal to the valence of the anion (BO3) and y is equal to the valence of cation A. x and y are each independently a number ranging from 1 to 4, respectively, preferably a number ranging from 1 to 3.

In the process according to the present invention, the alkali that is used is selected from hydroxides of alkali metals or alkali earth metals, ammonium hydroxide and tetramethylammonium hydroxide; preferably sodium hydroxide, potassium hydroxide and tetramethylammonium hydroxide. The concentration of alkaline solution ranges from 0.5 to 15.0 mol/ℓ.

In the process according to the present invention, the substance(s) supplying cation A can be selected from chlorides, nitrates, hydroxides, oxalates, perchlorides, acetates, and organic salts of A including alkoxylates of A, or mixtures thereof, preferably chlorides or nitrates.

The substance(s) supplying cation B can be selected from chlorides, nitrates, hydroxides, perchlorides, acetates, and organic salts of B including alkoxylates of B, or mixtures thereof, preferably water-soluble salts, chlorides or nitrates.

According to the process of the present invention, the ratio of volume flow rate of the alkaline solution to the solution containing A, or the solution containing B, or the mixture thereof ranges from 0.5 to 10. The molar ratio of cation A and cation B ranges from 0.70 to 1.30.

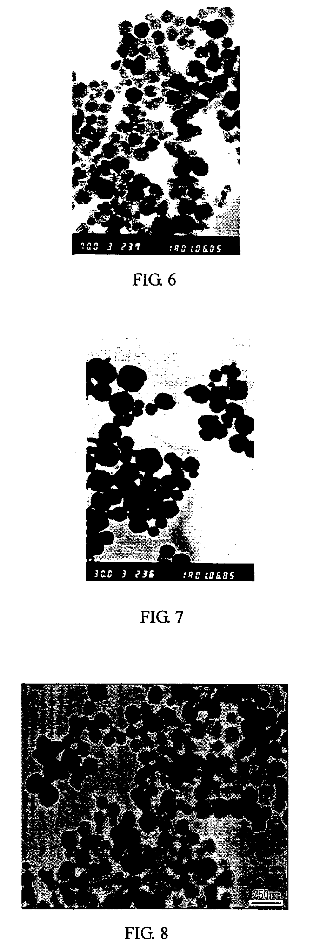

"High-gravity reactor" ("rotating packed bed high-gravity reactor") has been disclosed in the prior art, for example, as disclosed in Chinese patent ZL95107423.7, ZL92100093.6, ZL91109225.2, ZL95105343.4, and Chinese patent applications of 00100355.0 and 00129696.5. All cited patents and patent applications are incorporated herein by reference. The difference between the high-gravity reactor according to the present invention and reactors in the prior art lies in the fact that the high-gravity reactor according to the present invention is a reactor for liquid-liquid reaction, and is equipped with at least two inlets for introducing different feed materials. As shown in Fig. 6, it has liquid-feeding inlets 21 and 22. During the reaction, the reactants react in the rotating packed bed. In detail, the packing which can be used in the high-gravity reactor according to the present invention includes but not limited to metallic and non-metallic materials, such as silk screen, porous board, moiré board, foam, regular packing.

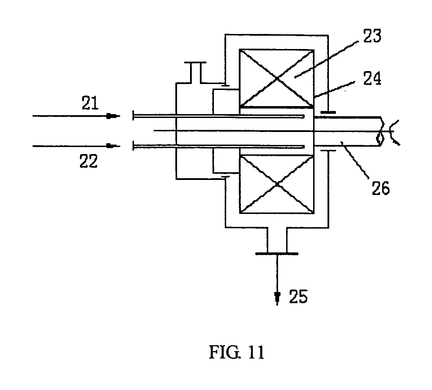

In one embodiment according to the present invention, as shown in Fig. 11, a process for preparing perovskite-type compound powders is provided, which comprises introducing a combined solution containing cation A (A is one or more metal elements selected from the group consisting of Li, Na, K, Mg, Ca, Sr, Ba, Pb, Sm, La, Nd, Bi and other rare-earth metal elements) and B (B is one or more metal elements selected from the group consisting of Ti, Zr, Sn, Hf, Nb, Ce, Al, Zn, Mn, Co, Ni, Fe, Cr, Y, Sc, W, Ta, and the like) and an alkaline solution into the high-gravity reactor through liquid- feeding inlets 21 and 22, respectively. During the rotation on the rotating drum 24 driven by axis 26, the combined solution containing A+ (A is one or more than one of metal elements selected from the group consisting of Li, Na, K, Mg, Ca, Sr, Ba, Pb, Sm, La, Nd, Bi and other rare-earth metal elements) and B+ (B is one or more than one of metal elements selected from the group consisting of Ti, Zr, Sn, Hf, Nb, Ce, Al, Zn, Mn, Co, Ni, Fe, Cr, Y, Sc, W, Ta, and the like) reacted with the alkaline solution in the packing 23 at a temperature ranging from about 60°C to about 100°C. Then the resulting mixture (slurry) discharged from the high-gravity reactor through outlet 25 is collected and subjected to post-treatment including stirring and aging, filtering, rinsing, and drying, to obtain the perovskite-type compound powders with a desired average particle size. The process for preparing perovskite-type compound powders according to the present invention can be used to prepare simplex or composite perovskite-type compound powders continuously.

In the process, the mixed aqueous solution containing cation A and B can be obtained by providing an aqueous solution containing cation A, into which is added an aqueous solution containing cation B, or by adding an aqueous solution containing cation A into an aqueous solution containing cation B.

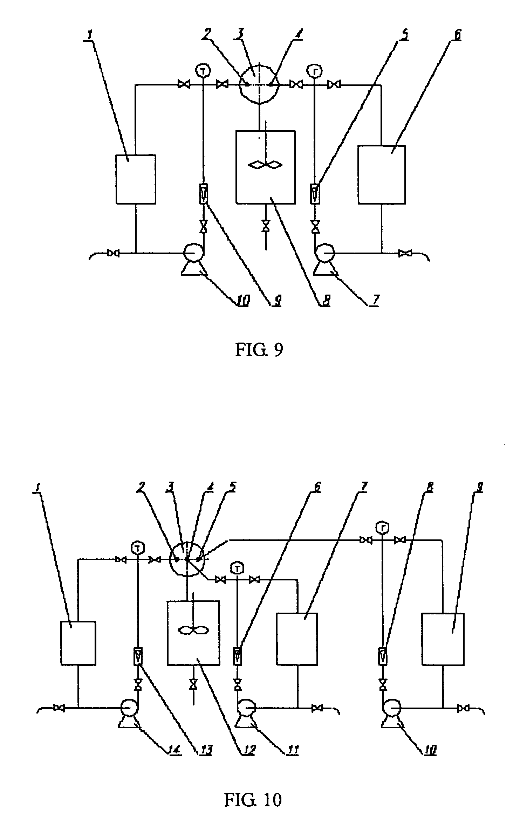

In one embodiment according to the present invention, as shown in Fig. 9, the mixed aqueous solution containing cation A (A is one or more metal elements selected from the group consisting of Li, Na, K, Mg, Ca, Sr, Ba, Pb, Sm, La, Nd, Bi and other rare-earth metal elements) and cation B (B is one or more metal elements selected from the group consisting of Ti, Zr, Sn, Hf, Nb, Ce, Al, Zn, Mn, Co, Ni, Fe, Cr, Y, Sc, W, Ta, and the like) prepared as described above is charged into the storage tank 6, and pumped by pump 7 into the rotating packed bed 3 through the liquid-feeding inlet 4 of the rotating packed bed after being measured by the flowmeter 5. Meanwhile, the alkaline solution is pumped out of the storage tank 1 by the pump 10, into the rotating packed bed 3 through the liquid-feeding inlet 2 after being measured by flowmeter 9. During the rotation of the rotating packed bed 3, the combined solution containing cation A (A is one or more metal elements selected from the group consisting of Li, Na, K, Mg, Ca, Sr, Ba, Pb, Sm, La, Nd, Bi and other rare-earth metal elements) and B (B is one or more metal elements selected from the group consisting of Ti, Zr, Sn, Hf, Nb, Ce, Al, Zn, Mn, Co, Ni, Fe, Cr, Y, Sc, W, Ta, and the like) contacts and reacts sufficiently with the alkaline solution in porous packing layer (not shown) of rotating packed bed 3 at a temperature ranging from about 60 °C to about 100 °C, preferably above about 70 °C, more preferably above 80°C.

In another embodiment according to the present invention (as shown in Fig. 10), a solution containing cation B (B is one or more metal elements selected from the group consisting of Ti, Zr, Sn, Hf, Nb, Ce, Al, Zn, Mn, Co, Ni, Fe, Cr, Y, Sc, W, Ta, and the like) and a solution containing cation A (A is one or more metal elements selected from the group consisting of Li, Na, K, Mg, Ca, Sr, Ba, Pb, Sm, La, Nd, Bi and other rare-earth metal elements) and an alkaline solution, are introduced into the rotating packed bed 3 through liquid-feeding inlets 2, 4, and 5, respectively, and during the rotation on the rotating packed bed 3, the solution containing cation B (B is one or more metal elements selected from the group consisting of Ti, Zr, Sn, Hf, Nb, Ce, Al, Zn, Mn, Co, Ni, Fe, Cr, Y, Sc, W, Ta, and the like), and the solution containing cation A (A is one or more metal elements selected from the group consisting of Li, Na, K, Mg, Ca, Sr, Ba, Pb, Sm, La, Nd, Bi and other rare-earth metal elements) are sufficiently contacted and reacted with the alkaline solution in the porous packing layer (not shown) of rotating packed bed 3 at a temperature ranging from about 60 °C to about 100 °C, preferably above about 70 °C, more preferably above 80 °C.

The resulting mixture containing reaction product is fed into the stirring vessel 8 through the liquid outlet of the reactor after reaction. Preferably, said resulting mixture collected in the stirring vessel 8 is stirred and aged for a period of time, for example, for 3 to 5 minutes, in the stirring vessel. Then the aged suspension is filtrated and rinsed with water, preferably with deionized water, at a temperature of about 60°C to about 100°C, and then dried to obtain perovskite-type compound powders.

According to the process of the present invention, after the ultrahigh gravity reactor is started up, the rotary speed of the rotor of the rotating packed bed ranges from about 100 rpm to about 10000 rpm during the reaction, preferably, from about 150 rpm to about 5000 rpm, more preferably, from about 200 rpm to about 3000 rpm, still more preferably, from about 500 rpm to about 2000 rpm.

In the process according to the present invention, the substance(s) supplying cation A (A is one or more metal elements selected from the group consisting of Li, Na, K, Mg, Ca, Sr, Ba, Pb, Sm, La, Nd, Bi and other rare-earth metal elements) can be selected from water-soluble salts of A, including but not limited to chlorides, nitrates, hydroxides, oxalates, perchlorides, acetates, and organic salts of A such as alkoxylates of A, or mixtures thereof, preferably chlorides, nitrates and organometallic salts of A such as alkoxylates ofBa.

In the process according to the present invention, the substance(s) supplying cation B (B is one or more metal elements selected from the group consisting of Ti, Zr, Sn, Hf, Nb, Ce, Al, Zn, Mn, Co, Ni, Fe, Cr, Y, Sc, W, Ta, and the like) can be selected from water-soluble salts of B, including but not limited to chlorides, nitrates, hydroxides, oxychlorides, and organic salts of B, or mixtures thereof

In the process according to the present invention, the alkali used herein is selected from hydroxides of alkali metals or alkali earth metals, ammonium hydroxide, tetramethylammonium hydroxide, and mixtures thereof, preferably, sodium hydroxide, potassium hydroxide or tetramethylammonium hydroxide.

In the process according to the present invention, the flow rate of the alkaline solution, and the aqueous solution containing A or B, or the combined solution containing A and B can be varied in a very wide range, and can be selected depending on the conditions including diameter of the rotating packed bed, rotary speed, reaction temperature, and concentration of the reactants. Preferably, the ratio of the volume flow rates of the alkaline solution to the aqueous solution containing A or B, or the combined solution containing A and B is in a range of about 0.5 to 10. The concentration of cation B in the aqueous solution containing water-soluble salts of B or other aqueous solutions containing cation B is about 0.1 to 5.0 mol/ℓ, preferably, about 0.3 to 3.0 mol/ℓ, more preferably, about 0.3 to 1.5 mol/ℓ; the concentration of cation A in the solution containing cation A is about 0.1 to 5.0 mol/ℓ, preferably, about 0.3 to 3.0 mol/ℓ, more preferably, about 0.3 to 1.5 mol/ℓ. These solutions having above-mentioned concentrations can be mixed to obtain the solution containing B and A. In the process according to the present invention, the molar ratio of A/B in the solution containing B and A ranges from about 0.80 to about 1.20, preferably, from about 0.90 to about 1.10, more preferably, from about 0.95 to about 1.08.

In the process according to the present invention, the concentration of the alkaline solution is about 0.5 to about 15.0 mol/ℓ, preferably, about 1.0 to about 10.0 mol/ℓ, more preferably, about 2.5 to about 7.0 mol/ℓ. In the process according to the present invention, the pH value of the resulting mixture after reaction is maintained at higher than about 10, preferably higher than 12, more preferably higher than about 12.5.

In the process according to the present invention, the material that can provide B, and A, and the alkaline solution can be industrial grade or analytical pure reagents. If they are industrial grade reagents, it is preferred to refine them to remove the impurities therefrom.

In the process according to the present invention, during the reaction, additives comprising a crystal form controlling agent or a dispersant can also be added into the solution containing cation B and/or A or the alkaline solution, to facilitate further dispersion and refinement of particles, to narrow the particle size distribution, to control the particle shape of the perovskite-type compound powders and to improve properties thereof.

The resulting slurry is discharged through the outlet of the rotating packed bed, and collected in the storage tank equipped with a stirrer. The slurry in the storage tank equipped with a stirrer is agitated and aged, filtrated, rinsed, and dried, to obtain perovskite-type compound powders.

Non-limiting examples of the resulting product according to the present invention include but not limited to Ba₁₋ₐSrₐTiO₃, wherein a is in the range of 0 to 1, such as Ba_{0.85}Sr_{0.15} TiO₃, Ba_{0.8}Sr_{0.2}TiO₃, or Ba_{0.5}Sr_{0.5}TiO₃; Ba₁₋ₐTiₐZrO₃, wherein a is in the range of 0 to 1, such as BaTi_{0.85}Zr_{0.15}O₃, BaTi_{0.9}Zr_{0.05}O₃, BaTi_{0.7}Zr_{0.3}O₃; Ba₁₋ₐSrₐTi_{1-b}Zr_{b}O₃, wherein a and b are each independently in the range of 0 to 1 respectively, such as Ba_{0.75}Sr_{0.25}Ti_{0.75}Zr_{0.25}O₃.

### THE RESULTS OF ANALYTICAL MEASUREMENTS

The perovskite-type compound powders prepared according to the process of the present invention can be analyzed by a transmission electron microscope (TEM). For example, in one embodiment of the present invention, approximately 0.05 grams of dried perovskite-type compound powders are dispersed in ethanol (50 ml), and sonicated in an ultrasonic cleaner. Then the resulting suspension is dropped onto a copper grid used for observing with an electron microscope. The primary particle size and the form of the particle are analyzed by TEM (HITACHI-800, Japan).

The results show that the average particle size of the perovskite-type compound powders prepared according to the process of the present invention is very small, and that the particle size distribution thereof is narrow. The average particle size thereof is less than about 500 nm, preferably, less than about 250 nm, more preferably, less than about 150 nm. For example, the average particle size ranges from about 500 nm to about 10 nm, preferably, from about 250 nm to about 20 nm, more preferably, from about 150 nm to about 20 nm.

Therefore, compared with the prior art, the process of the present invention can be used to controllably produce perovskite-type compound powders or a slurry containing said powders which have a predetermined average particle size, an uniform particle size distribution and a regular crystal form continuously in a short time, since the high-gravity reactor is used. The powders do not need to be calcined before ceramics being sintered. Therefore, energy expenses and production cost can be lowered substantially.

Moreover, the perovskite-type compound powder prepared according to the process of the invention have a small average particle size, a narrow particle size distribution, a perfect crystal form and a uniform particle shape, and are suitable for use as raw material for making dielectric, piezoelectric, anti-ferroelectric, pyroelectric, pressure-resistance, sensing, microwave media, and other ceramics.

### Examples

Hereinafter, the embodiments within the scope of the present invention will be further described and explained in detail with reference to the following non-limiting examples for preparing the perovskite-type compound powders according to the present invention. The examples are for illustrative purpose and are not intended to limit the scope of the invention. It will be understood by those of ordinary skill in the art that various changes may be made therein without departing from the spirit and scope of the present invention. All the concentrations used in the examples are measured by weight, unless mentioned otherwise.

### Example 1

### Preparation of barium strontium titanate by the high-gravity technology

4.5 mol/ℓ of NaOH solution was prepared, wherein NaOH was analytical pure. The NaOH solution was added into the stainless NaOH storage tank 1 (as shown in Fig.9). The preparation of a combined solution containing (BaCl₂+SrCl₂) and TiCl₄ comprised the following steps: preparing a SrCl₂ solution with a concentration of 2.0 mol/ℓ, a BaCl₂ solution with a concentration of 2.0 mol/ℓ and a TiCl₄ solution with a concentration of 2.0 mol/ℓ, respectively; preparing a combined solution containing [BaCl₂]+[SrCl₂]+ [TiCl₄] with a total concentration of 1 mol/ℓ by adding deionized water, the molar ratio of [SrCl₂]/(BaCl₂+SrCl₂) being kept at 0.15, and the molar ratio of ([BaCl₂]+[SrCl₂]) /[TiCl₄] being kept at 1.05. The combined solution containing BaCl₂, SrCl₂ and TiCl₄ thus prepared was added into the storage tank 6.

After the high-gravity reactor was started up, the combined solution containing BaCl₂, SrCl₂ and TiCl₄ with a total concentration of 1 mol/ℓ was pumped out of the storage tank 6 by the pump 7, into the rotating packed bed 3 through the liquid-feeding inlet 4 of the rotating packed bed after being measured by the flowmeter 5, with a flow rate of 30.0 ℓ /h. And the NaOH solution (4.5 mol/ℓ) was pumped out of the NaOH storage tank 1 by the pump 10, into the rotating packed bed 3 through the liquid-feeding inlet 2 after being measured by flowmeter 9, with a flow rate of 30.0 ℓ/h. The combined solution containing BaCl₂, SrCl₂ and TiCl₄ contacted and reacted sufficiently with the NaOH solution in the packing layer of the rotating packed bed 3 after being charged into the high-gravity reactor. During the reaction, the temperature of the rotating packed bed was maintained at about 90 °C, and the rotary speed was set at 1440 rpm. Then the resulting suspension was collected into the stirring vessel 8, in which the combined solution containing BaCl₂, SrCl₂ and TiCl₄ reacted with the NaOH solution for 20 min.

The resulting suspension was stirred and aged in the stirring vessel for 3 to 5 min. Then the aged suspension was filtrated and rinsed for three times with deionized water having a temperature of about 95 °C, and then dried in a drier at about 100 °C to obtain Ba_{0.85}Sr_{0.15}TiO₃ powders.

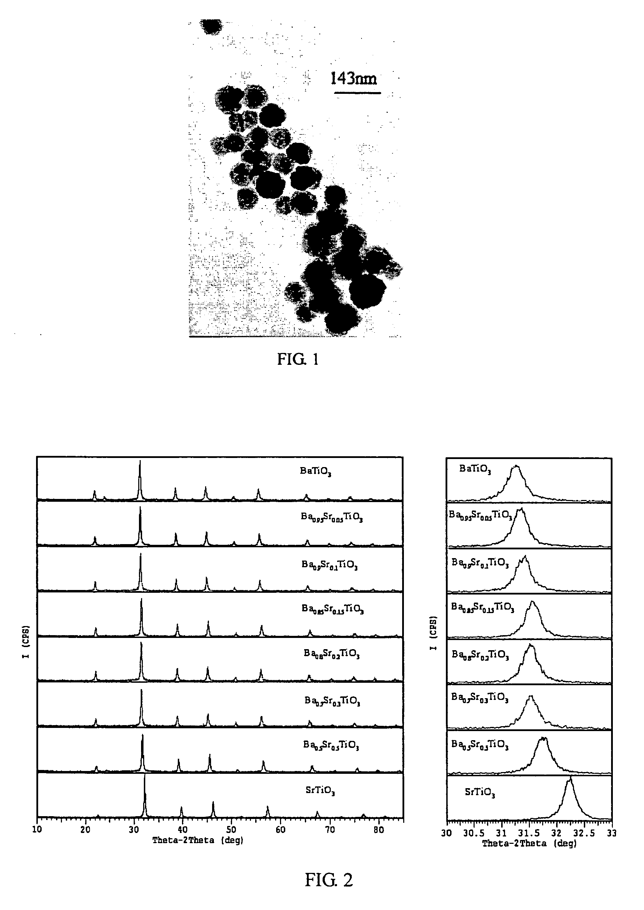

0.1 g of the powders were dispersed in 50 ml of ethanol, and then sonicated in an ultrasonic cleanser for 20 min. Then the resulting suspension was dropped onto a copper grid used for observing with an electron microscope. The primary particle size and the form of the particles were analyzed by TEM (HITACHI-800, Japan), and the TEM image thereof was shown in Fig.1. Referred to Fig.1, the analytical results showed that the resulting barium strontium titanate powders were in a spherical form and had an average particle size of about 70 nm.

The crystal phases of the strontium titanate powders were analyzed by an X-ray diffractometer ((Cu*Kα*, scanning speed 4°/min) (XRD-600, Shimadzu, Japan). The XRD scanning graph of the powders was shown in Fig.2. From Fig.2, it was found that the diffraction peak of the powders was located between that of the cubic BaTiO₃ and that of the cubic SrTiO₃.

### Example 2

### Preparation of barium strontium titanate doped with different amount of strontium by the high-gravity technology

The experimental conditions were the same as example 1 except the following changes.

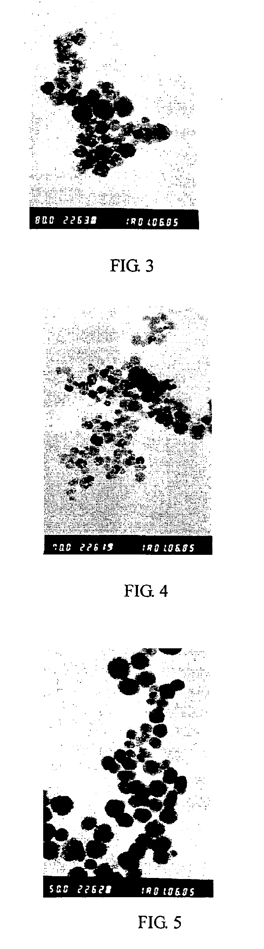

The experiment was repeated using the same procedure as described in Example 1 except that the molar ratio of [SrCl2]/([BaCl₂]+[SrCl₂]) was 0.05, 0.1, 0.20, 0.30, 0.50, respectively. The obtained powers had a particle size of less than 100 nm. Fig. 3 and 4 showed the TEM images in the case that the molar ratio of [SrCl₂]/([BaCl₂]+[SrCl₂]) was 0.2 and 0.5 respectively. Fig. 2 illustrated XRD graphs of the powders doped with different amounts of Sr.

### Example 3

The example illustrated the preparation of barium strontium titanate powders using different reactants.

4.5 mol/ℓ of NaOH solution was prepared, wherein NaOH was analytical pure. 1 mol/ ℓ of Sr(OH)₂ solution and 1 mol/ℓ of Ba(OH)₂ solution were prepared respectively. The NaOH solution, the Sr(OH)₂ solution and the Ba(OH)₂ solution as described above were mixed to form a combined solution having a volume of 10 ℓ. The concentration of [OH-] in the combined solution was 6.0 mol/ℓ, and the total concentration of [Ba²⁺]+[Sr²⁺] was 0.5 mol/ℓ, while the molar ratio of [Sr²⁺]/([Ba²⁺]+[Sr²⁺]) was kept at 0.15. The combined solution containing NaOH, Sr(OH)₂, and Ba(OH)₂ prepared as described above was added into the stainless NaOH storage tank 1 (as shown in Fig.9). 10 ℓ of TiCl₄ solution with a concentration of 0.48 mol/ℓ was prepared, and then charged into the storage tank 6.

After the high-gravity reactor was started up, the TiCl₄ solution with a concentration of 0.48 mol/ℓ was pumped out of the storage tank 6 by the pump 7, into the rotating packed bed 3 through the liquid-feeding inlet 4 of the rotating packed bed after being measured by the flowmeter 5, with a flow rate of 30.0 ℓ/h. And the combined solution containing NaOH, Ba(OH)₂ and Sr(OH)₂ was pumped by the pump 10 out of the storage tank 1, into the rotating packed bed 3 through the liquid-feeding inlet 2 after being measured by flowmeter 9, with a flow rate of 30.0 ℓ/h. The combined solution containing NaOH, Ba(OH)₂, Sr(OH)₂ contacted and reacted sufficiently with the NaOH solution in the packing layer of the rotating packed bed 3 after being added into the high-gravity reactor. During the reaction, the temperature of the rotating packed bed was maintained at about 90 °C, and the rotary speed was set at 1440 rpm. The resulting suspension was collected in the stirring vessel 8, in which the reaction lasted for 20 min.

The resulting suspension was stirred and aged in the stirring vessel for 3 to 5 min. Then the aged suspension was filtrated and rinsed for three times with deionized water having a temperature of about 95 °C, and then dried in a drier at about 100°C to obtain Ba_{0.85}Sr_{0.15}TiO₃ powders. The obtained powers had a particle size of less than 100 nm. The diffraction peak of the powders in the XRD image was located between that of the cubic BaTiO₃ and that of the cubic SrTiO₃, similar to example 1.

### Example 4

### Preparation of barium zirconate titanate by the high-gravity technology

4.5 mol/ℓ of NaOH solution was prepared, wherein NaOH was analytical pure. The NaOH solution (4.5 mol/ℓ) was charged into the stainless NaOH storage tank 1 (as shown in Fig.9). The preparation of a combined solution containing (TiCl₂+ZrCl₄) and BaCl₂ comprised the following steps: preparing a ZrCl₄ solution with a concentration of 2.0 mol/ℓ, a BaCl₂ solution with a concentration of 2.0 mol/ℓ, and a TiCl₄ solution with a concentration of 2.0 mol/ℓ respectively; preparing a combined solution with a total concentration of 1.0 mol/ℓ by adding deionized water, while the molar ratio of [ZrCl₄]/([ZrCl₄]+TiCl₄]) was kept at 0.15, and the molar ratio of [BaCl₂]/([ZrCl₄]+TiCl₄]) was kept at 1.05. The combined solution containing BaCl₂, ZrCl₄ and TiCl₄ prepared as described above was added into the storage tank 6.

After the high-gravity reactor was started up, the combined solution containing BaCl₂, ZrCl₄ and TiCl₄ having a total concentration of 1 mol/ℓ was pumped out of the storage tank 6 by the pump 7, into the rotating packed bed 3 through the liquid-feeding inlet 4 of the rotating packed bed after being measured by the flowmeter 5, with a flow rate of 30.0 ℓ/h. And the NaOH solution (4.5 mol/ℓ) was pumped out of the NaOH storage tank 1 by the pump 10, into the rotating packed bed 3 through the liquid-feeding inlet 2 after being measured by flowmeter 9, with a flow rate of 30.0 ℓ/h. The combined solution containing BaCl₂, ZrCl₄ and TiCl₄ contacted and reacted sufficiently with the NaOH solution in the packing layer of the rotating packed bed 3 after being charged into the high-gravity reactor. During the reaction, the temperature of the rotating packed bed was maintained at about 90 °C, and the rotary speed was set at 1440 rpm. Then the resulting suspension was collected into the stirring vessel 8, in which the combined solution containing BaCl₂, ZrCl₄ and TiCl₄ reacted with the NaOH solution for 20 min.

The resulting suspension was stirred and aged in the stirring vessel for 3 to 5 min. Then the aged suspension was filtrated and rinsed for three times with deionized water having a temperature of about 95 °C, and then dried in a drier at about 100 °C to obtain BaTi_{0.85}Zr_{0.15}O₃ powders.

0.1 g of the powders were dispersed in 50 ml of ethanol, and then sonicated in an ultrasonic cleanser for 20 min. Then the resulting suspension was dropped onto a copper grid used for observing with an electron microscope. The primary particle size and the form of the particle were analyzed by TEM (HITACHI-800, Japan), and the TEM image thereof was shown in Fig.5. Referred to Fig.5, the analytical results showed that the resulting barium zirconate titanate powders prepared in the example were in a spherical form and had an average particle size of about 80 nm. The powders were cubic BaTi_{0.85}Zr_{0.15}O₃ crystals, whose diffraction peak in XRD image was located between the cubic BaTiO₃ and the cubic SrTiO₃.

### Example 5

The experiment was repeated using the same procedure as described in Example 4 except that ZrOCl₂ was used as Zr source. The resulting barium zirconate titanate powders had the same characteristic as those obtained in example 4.

### Example 6

### Preparation of barium zirconate titanate doped with different amount of zirconium by the high-gravity technology

The experimental conditions were the same as example 5 except the following changes.

The experiment was repeated using the same procedure as described in Example 4 except that the molar ratio of [ZrOCl₂]/([TiCl₄]+[ZrOCl₂]) was 0.05, 0.1, 0.20, 0.30, 0.50, respectively. Although the average particle size of the resulting powders increased slightly with the increase of the doping amount, the powders had an average particle size of less than 200 nm. Fig. 6 and 7 showed the TEM images in the case that the molar ratio of [ZrOCl₂]/([TiCl₄]+[ZrOCl₂]) was 0.05 and 0.3 respectively.

### Example 7

### Preparation of barium stannate titanate by the high-gravity technology

The experimental conditions were the same as in example 1 except the following changes.

3 mol/ℓ of NaOH solution was prepared. Also, a combined solution was prepared, in which the total concentration of [BaCl₂ +TiCl₄+SnCl₄] was 3 mol/ℓ, and the molar ratio of [BaCl₂] /[TiCl₄] was kept at 1.05.

4.5 mol/ℓ of NaOH solution was prepared, wherein NaOH was analytical pure. The NaOH solution (4.5 mol/ℓ) was added into the stainless NaOH storage tank 1(as shown in Fig.9). The preparation of a combined solution containing (BaCl₂+SnCl₄) and TiCl₄ comprised the following steps: preparing a SnCl₄ solution with a concentration of 2.0 mol/ℓ, a BaCl₂ solution with a concentration of 2.0 mol/ℓ, and a TiCl₄ solution with a concentration of 2.0 mol/ℓ respectively; preparing a combined solution containing [BaCl₂]+[TiCl₄]+ [SnCl₄] with a total concentration of 1 mol/ℓ by adding deionized water, while the molar ratio of [SnCl₄]/([TiCl₄]+[SnCl₄]) was kept at 0.15, and the molar ratio of [BaCl₂]/([TiCl₄] +SnCl₄]) was kept at 1.05. The combined solution containing BaCl₂, SnCl₄ and TICl₄ thus prepared was charged into the storage tank 6.

After the high-gravity reactor was started up, the combined solution containing BaCl₂, SnCl₄ and TiCl₄ with a total concentration of 1 mol/ℓ was pumped out of the storage tank 6 by the pump 7, into the rotating packed bed 3 through the liquid-feeding inlet 4 of the rotating packed bed after being measured by the flowmeter 5, with a flow rate of 30.0 ℓ /h. And the NaOH solution (4.5 mol/ℓ) was pumped out of the NaOH storage tank 1 by the pump 10, into the rotating packed bed 3 through the liquid-feeding inlet 2 after being measured by flowmeter 9, with a flow rate of 30.0 ℓ/h. The combined solution containing BaCl₂, SnCl₄ and TiCl₄ contacted and reacted sufficiently with the NaOH solution in the packing layer of the rotating packed bed 3 after being charged into the high-gravity reactor. During the reaction, the temperature of the rotating packed bed was maintained at about 90 °C, and the rotary speed was set at 1440 rpm. Then the resulting suspension was collected into the stirring vessel 8, in which the combined solution containing BaCl₂, SnCl₄ and TiCl₄ reacted with the NaOH solution for 20 min.

The resulting suspension was stirred and aged in the stirring vessel for 3 to 5 min. Then the aged suspension was filtrated and rinsed for three times with deionized water having a temperature of about 90 °C, and then dried in a drier to obtain BaTi0.85Sn0.15O3 powders. TEM analytical results showed that the resulting powders were in a spherical form and had an average particle size of less than 100 nm.

### Example 8

The experimental conditions were the same as example 1 except the following changes.

The experiment was repeated using the same procedure as described in Example 1 except that the KOH solution was used as alkaline solution. The concentration of the KOH solution was the same as that of the NaOH solution.

The resulting product had the same characteristics as those obtained in example 1.

### Example 9

### Preparation of barium titanate doped with different amount of strontium and zirconium by the high-gravity technology

The experimental conditions were the same as in Example 1 except following changes.

The same NaOH solution as used in Example 1 was added into the stainless NaOH storage tank 1 (as shown in Fig.9). 2.0 mol/ℓ of SrCl₂ solution, 2.0 mol/ℓ of BaCl₂ solution, 2.0 mol/ℓ of ZrCl₄ solution and 2.0 mol/ℓ of TiCl₄ solution were prepared respectively. The total concentration of [BaCl₂]+[SrCl₂]+[TiCl₄]+[ZrCl₄] in the combined solution prepared by adding deionized water was 1 mol/ℓ, while the molar ratio of [SrCl₂]/([BaCl₂]+[SrCl₂]) was kept at 0.25, the molar ratio of [ZrCl₄]/([ZrCl₄]+[TiCl₄]) at 0.25, and the molar ratio of ([BaCl₂]+[SrCl₂])/([TiCl₄]+[ZrCl₄]) at 1.05. The combined solution containing BaCl₂, SrCl₂, ZrCl4 and TiCl4 thus prepared was charged into the storage tank 6.

After the high-gravity reactor was started up, the combined solution containing BaCl₂, SrCl₂, ZrCl₄ and TiCl₄ with a total concentration of 1 mol/ℓ was pumped out of the storage tank 6 by the pump 7, into the rotating packed bed 3 through the liquid-feeding inlet 4 of the rotating packed bed after being measured by the flowmeter 5, with a flow rate of 30.0 ℓ/h. And the NaOH solution (4.5 mol/ℓ) was pumped out of the storage tank 1 by the pump 10, into the rotating packed bed 3 through the liquid-feeding inlet 2 after being measured by flowmeter 9, with a flow rate of 30.0 ℓ/h. The combined solution containing BaCl₂, SrCl₂, ZrCl₄ and TiCl₄ contacted and reacted sufficiently with the NaOH solution in the packing layer of the rotating packed bed 3 after being added into the high-gravity reactor. During the reaction, the temperature of the rotating packed bed was maintained at about 90 °C, and the rotary speed was set at 1440 rpm. Then the resulting suspension was collected into the stirring vessel 8, in which the reaction between the combined solution containing BaCl₂, SrCl₂, ZrCl₄ and TiCl₄ and the NaOH solution lasted for 20 min.

The resulting suspension was stirred and aged in the stirring vessel for 3 to 5 min. Then the aged suspension was filtrated and rinsed for three times with deionized water having a temperature of about 95 °C, and then dried in a drier at about 100 °C to obtain Ba_{0.75}Sr_{0.25}Ti_{0.75}Zr_{0.25}O₃ powders.

0.1 g of the powders were dispersed in 50 ml of ethanol, and then sonicated in an ultrasonic cleanser for 20 min. Then the resulting suspension was dropped onto a copper grid used for observing with an electron microscope. The primary particle size and the form of the particles were analyzed by TEM (HITACHI-800, Japan), and the TEM image thereof was shown in Fig. 8. Referred to Fig. 8, the analytical results showed that the barium titanate powders doped with both 25% of strontium and 25% of zirconium prepared in this example were in a spherical form and had an average particle size of less than 100 nm.

## Claims

1. A process for preparing perovskite-type compound AₓBO₃)_{y} powders, comprising:
reacting a solution containing cation A, a solution containing cation B with an alkaline solution, or reacting a combined solution comprising cation A and B with an alkaline solution, or reacting a combined solution comprising cation A and alkali with a solution containing cation B, in a high-gravity reactor at a temperature of from about 60 °C to about 100 °C; wherein A is one or more metal elements selected from the group consisting of Li, Na, K, Mg, Ca, Sr, Ba, Pb, Sm, La, Nd, Bi, and other rare-earth metal elements; wherein B is one or more metal elements selected from the group consisting of Ti, Zr, Sn, Hf, Nb, Ce, Al, Zn, Mn, Co, Ni, Fe, Cr, Y, Sc, W, Ta, and the like; x and y are numbers which balance the valence;
provided that said Aₓ(BO₃)_{y} does not represent BaTiO₃ and SrTiO₃.

2. The process according to claim 1, wherein said alkali is selected from the group consisting of hydroxides of alkali metals or alkali earth metals, ammonium hydroxide and tetramethylammonium hydroxide.

3. The process according to claim 1, wherein said alkali is selected from the group consisting of sodium hydroxide, potassium hydroxide and tetramethylammonium hydroxide.

4. The process according to any one of the preceding claims, wherein A is one or more metal elements selected from the group consisting of Li, Na, K, Mg, Ca, Sr, Ba, Pb, Sm, La, Nd, and Bi; and B is one or more metal elements selected from the group consisting of Ti, Zr, Sn, Hf, Nb, Ce, Al, Zn, Mn, Co, Ni, Fe, Cr, Y, Sc, W, and Ta.

5. The process according to any one of the preceding claims, wherein A is one or more metal elements selected from the group consisting of Mg, Ca, Sr, and Ba; and B is one or more metal elements selected from the group consisting of Ti, Zr, and Sn.

6. The process according to any one of the preceding claims, wherein the substance(s) supplying Sr²⁺ is selected from the group consisting of strontium chloride, strontium nitrate, strontium hydroxide, strontium oxalate, strontium perchloride, strontium acetate, and organic salts of strontium including alkoxylates of strontium, or mixtures thereof; and the substance(s) supplying Ti4+ is selected from the group consisting of titanium chloride, titanium nitrate, titanium hydroxide, titanium oxychloride, organic salts of titanium including alkoxylates of titanium, or mixtures thereof

7. The process according to any one of the preceding claims, wherein the ratio of volume flow rate of the alkaline solution to the solution containing A, or the solution containing B, or the mixture thereof ranges from 0.5 to 1.0.

8. The process according to any one of the preceding claims, wherein the molar ratio of cation A to cation B ranges from 0.70 to 1.30.

9. The process according to any one of the preceding claims, wherein the concentration of the solution containing Ti4+ ranges from 0.1 to 3.0 mol/ℓ.

10. The process according to any one of the preceding claims, wherein the concentration of the alkaline solution ranges from 0.5 to 15.0 mol/ℓ.
